# EUROPEAN PATENT APPLICATION

(11) **EP 1 768 361 A2**
(43) Date of publication of application: **28.03.2007**
(21) Application number: 06015111.5
(22) Date of filing: 20.07.2006
(51) Int. Cl.: H04M 1/65, H04M 1/725

(54) **Method of receiving a call in a wireless terminal**

(30) Priority: 22.09.2005 KR 20050088090
(71) Applicant: Samsung Electronics Co., Ltd., Suwon-si, Gyeonggi-Do (KR)
(72) Inventor: Kim, Sun-Gyum, Yeongtong-gu, Suwon-si, Gyeonggi-do (KR)
(74) Representative: Lang, Johannes

(57) **Abstract**

Disclosed is a method and wireless terminal for receiving a call. Voice data received through an automatic response for a received call are converted into text data, and the converted text data are displayed. The user easily checks received calls when it is difficult to make communication with a caller.

## Description

### BACKGROUND OF THE INVENTION

### Field of the Invention

The present invention relates to a wireless terminal and method of its use. More particularly, the present invention relates to a method and wireless terminal for receiving a call.

### Description of the Related Art

In a conventional wireless terminal, if a user is not available to communicate with a caller, the caller may record a message by using a voice-mail box function provided by the user's service provider (e.g. using a communication provider server). Thus, the user can receive and listen to the message recorded in the voice-mail box when the user so desires. Also, when the user presets an automatic response function, a predetermined announcement, for example, an outgoing message, is automatically output to a caller in response to a call. As such, the caller may speak and store a message as a voice in the user's wireless terminal after listening to the announcement. Thereafter, the user of the wireless terminal can output and listen to the recorded voice at the user's convenience. In this case, in order to listen to a voice recorded by a caller, the user must operate his/her wireless terminal so as to enter a predetermined menu, which causes inconvenience to the user. Also, when a plurality of messages have been recorded, the user must listen to all the messages one by one in order to listen to a desired message. This causes considerable inconvenience to the user.
Accordingly, there is a need for an improved method and wireless terminal for receiving calls.

### SUMMARY OF THE INVENTION

Exemplary embodiments of the present invention address at least the above problems and/or disadvantages and provide at least the advantages described below. Accordingly, an exemplary embodiment of the present invention has been made to solve the above-mentioned problems occurring in the prior art, and an object of the present invention is to provide a method and wireless terminal for enabling a user to more precisely and easily receive a call.

To accomplish this object, in accordance with an exemplary aspect of the present invention, there is provided a method and a wireless terminal for receiving a call in which, when a call is received, it is determined if an automatic response is set, voice data from a caller is received when it is determined that an automatic response is set to be executed, the received voice data is converted into text data, and the text data is displayed.

### BRIEF DESCRIPTION OF THE DRAWINGS

The above and other objects, features and advantages of the present invention will be more apparent from the following detailed description taken in conjunction with the accompanying drawings, in which:
FIG. 1 is a block diagram illustrating the construction of a wireless terminal, employed in accordance with an exemplary embodiment of the present invention;
FIG. 2 is a flowchart illustrating a procedure of setting an automatic response according to an exemplary embodiment of the present invention;
FIG. 3 is a flowchart illustrating a call reception operation according to an exemplary embodiment of the present invention; and
FIGs. 4A to 4C are views illustrating screen images displayed when a call is received according to an exemplary embodiment of the present invention.

Throughout the drawings, the same drawing reference numerals will be understood to refer to the same elements, features, and structures.

### DETAILED DESCRIPTION OF EXEMPLARY EMBODIMENTS

Hereinafter, one exemplary embodiment according to the present invention will be described with reference to the accompanying drawings. In the below description, many particular items such as a detailed component device are shown, but these are given only for providing the general understanding of the present invention, it will be understood by those skilled in the art that the present invention can be embodied without including these particular items.

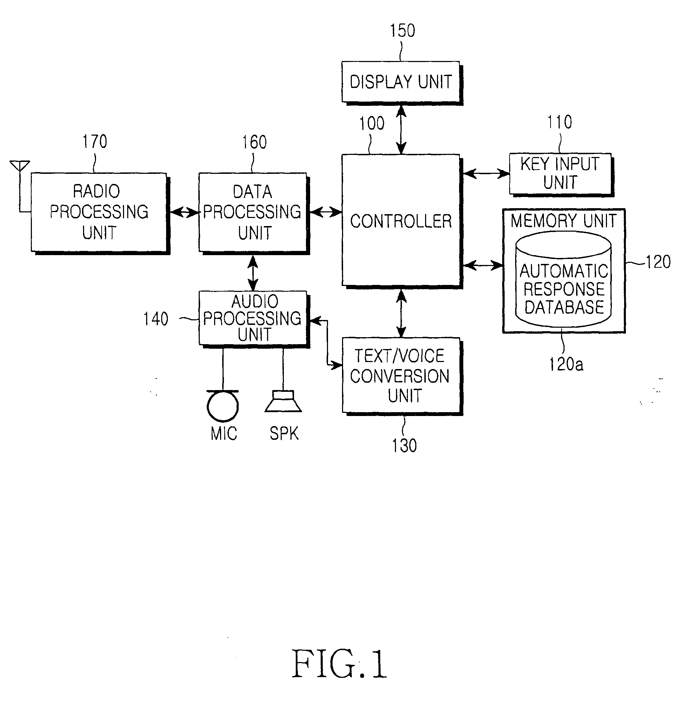

FIG. 1 is a block diagram illustrating the construction of a wireless terminal, according to an exemplary embodiment of the present invention. A controller 100 controls the general operation of the wireless terminal. According to an exemplary embodiment of the present invention, the controller 100 determines if it is selected to execute an automatic response to a call, when the call is received by the user. If the controller determines that it is selected to execute an automatic response, the controller 100 causes transmission of the automatic response to the caller. Also, the controller 100 controls that voice data received from the caller are stored in a response database 120A. The controller 100 causes the stored voice data to be converted into text data when the user so desires, or that the voice data may be converted into text data at the moment that they are input. According to an exemplary embodiment of the present invention, when a plurality of calls have been received, and a plurality of associated voice data have been input, the controller 100 causes a received voice data list, representing the plurality of received voice data, to be displayed on a display unit 150. In addition, the controller 100 controls at least one voice data, selected by the user from the received voice data list, to be displayed as text data on the display unit 150.

A key input unit 110 may include keys for inputting numeral and character information and function keys for setting various functions. According to an exemplary embodiment of the present invention, the key input unit 110 may include a separate key for executing an automatic response to a received call. Also, a menu for executing the automatic response may be set by using a plurality of keys. In the case in which a plurality of calls have been received and associated voice data has been input, a list of the received voice data may be displayed through the display unit 150 and the key input unit 110 enables the user to select at least one voice data from the displayed list.

A memory 120 may include program memory and data memory. The program memory stores programs for controlling the general operation of the wireless terminal. According to an exemplary embodiment of the present invention, the memory 120 stores a message, as part of the automatic response, to be output to a caller when it has been determined that an automatic response is to be executed in response to a received call. In addition, the memory 120 includes the automatic response database 120A. Database 120A may have voice data received from a caller when the automatic response is executed or text data converted from the voice data stored therein. Also, the memory 120 may convert input voice data into text data and store the converted text data in the automatic response database 120A, or may store the text data in an area which has stored text messages.

A text/voice conversion unit 130 converts voice data into text data, or converts text data into voice data. When the controller 100 determines that it is selected to execute the automatic response to a received call, the text/voice conversion unit 130 receives voice data from a caller, converts the received voice data into text data, and displays the converted text data through the display unit 150. Regarding the time point at which the received voice data are converted into text data by means of the text/voice conversion unit 130, if the controller 100 determines that the call has ended, the text/voice conversion unit 130 may convert the received voice data into text data and store the converted text data in the automatic response database 120A of the memory 120. Alternatively, when voice data are input from a caller according to the execution of the automatic response, the text/voice conversion unit 130 may store the input voice data in the automatic response database 120A, and may convert the stored voice data into text data when the user requests, so as to display the converted text data.

An audio processing unit 140 may include a codec, which contains a data codec for processing packet data and the like and an audio codec for processing an audio signal such as a voice. The audio processing unit 140 converts a digital audio signal received from the data processing unit 160 into an analog signal by means of the audio codec, thereby reproducing the converted analog signal. Also, the audio processing unit 140 converts an analog audio signal generated from a microphone into a digital audio signal by means of the audio codec and transmits the converted digital audio signal to the data processing unit 160. The codec may be separately constructed, or may be included in the controller 100. According to an embodiment of the present invention, the audio processing unit 140 outputs a sound signal informing that a call is or has been received. Also, the audio processing unit 140 functions to receive an automatic response message, which is transmitted to a caller upon receiving a call, through a microphone connected to the audio processing unit 140, when the execution of the automatic response is selected by the user.

The display unit 150 displays the current state, and each processing and operating state, under the control of the controller 100 according to key signals input from the key input unit 110. Also, the display unit 150 displays image data output from an image processing unit, and displays a user interface during execution of a photographing function. Herein, the display unit 150 may employ an LCD. In this case, the display unit 150 may include an LCD controller, a memory for storing image data, an LCD display element, or the like. The LCD may comprise a touch screen scheme, so that the key input unit 110 and the LCD may operate as an input section. The display unit 150 includes an image data display unit for outputting image data. According to an exemplary embodiment of the present invention, when the automatic response is executed in response to a received call, the display unit 150 functions to display a message or icon representing that there are voice data received from a caller. Also, when the user requests the voice data or when the voice data are input, the text/voice conversion unit 130 converts voice data into text data, and then the display unit 150 displays the converted text data. When a plurality of calls have been received, the display unit 150 displays reception information about voice data which have been received and stored.

The data processing unit (MODEM) 160 includes a transmitter for encoding and modulating a signal to be transmitted, and a receiver for decoding and demodulating the received signal.

A radio processing unit 170 performs a wireless communication function of the wireless terminal. The radio processing unit 170 includes an RF transmitter and an RF receiver. The RF transmitter up-converts and amplifies the frequency of a signal to be transmitted and the RF receiver low-noise-amplifies a received signal and down-converts the frequency of the received signal.

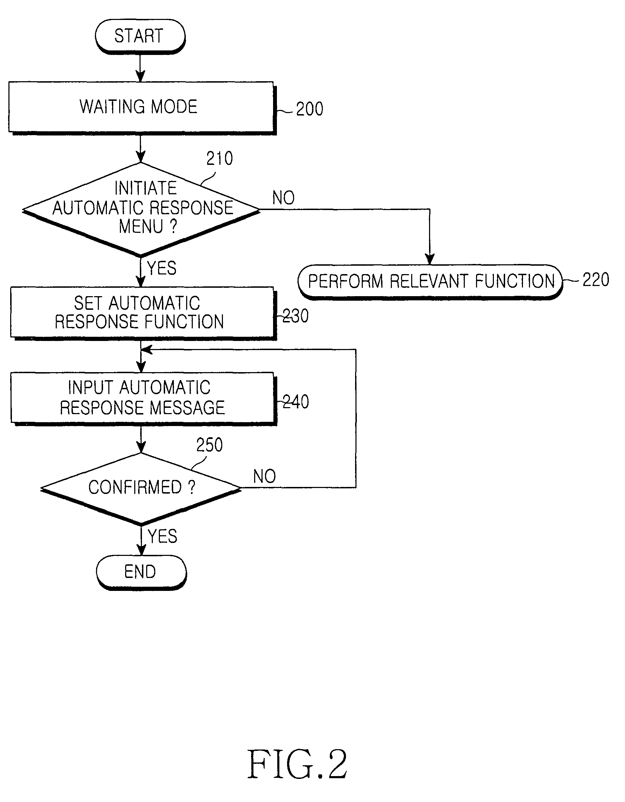

FIG. 2 is a flowchart illustrating a procedure for setting an automatic response according to an exemplary embodiment of the present invention. The controller 100 is in a waiting mode in step 200. The controller 100 receives a signal in the waiting mode and determines if it is the signal for initiating an automatic response setting menu. By use of the menu, an automatic response to a received call may be set (step 210). When the controller 100 determines that the received signal is not the signal for the automatic response setting menu, the controller 100 performs a function corresponding to the received signal in step 220. In contrast, when the controller 100 determines that the received signal is the signal for the automatic response setting menu, the controller 100 proceeds to step 230 to allow an automatic response to be set. In step 240, the controller 100 receives a message to be output to a caller when the automatic response is executed in response to a received call. The message to be output to the caller may be selected from pre-stored messages, or may be a voice message input from the user so as to represent the state of the user. Thereafter, when the controller 100 senses a confirmation signal for informing that the input and/or selection of a message is complete, the controller 100 finishes the automatic response setting procedure.

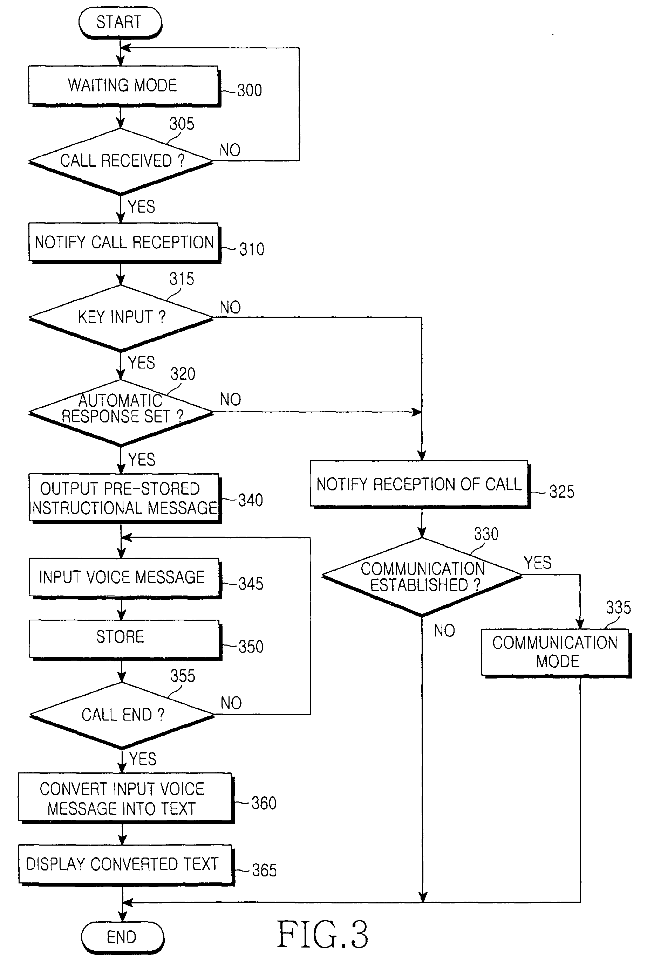

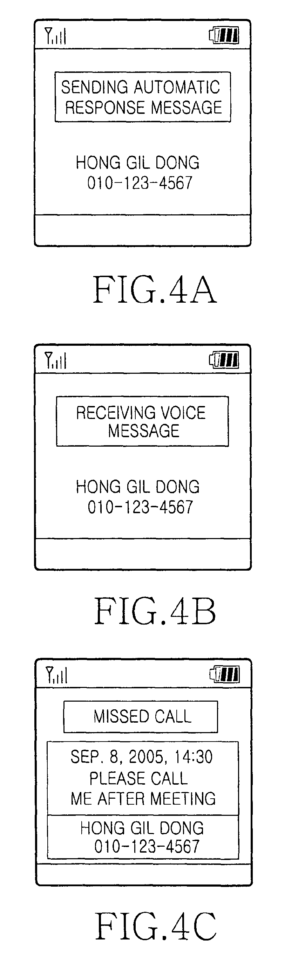

FIG. 3 is a flowchart illustrating the operation of executing an automatic response when a call is received according to an exemplary embodiment of the present invention, and FIGs. 4A to 4C are views illustrating screen images displayed when the automatic response is executed according to an exemplary embodiment of the present invention. In step 300, the controller 100 is in a waiting mode. When the controller 100 receives a signal in the waiting mode, the controller 100 determines if the received signal is a signal indicating that a call is received (step 305). When the controller 100 determines that the received signal indicates that a call is received, the controller 100 outputs a call-reception notification signal corresponding to the received call in step 310. In step 315, the controller 100 determines if a signal from a predetermined key is input. When the controller 100 determines in step 315 that the signal from the predetermined key is input, the controller 100 determines that an automatic response is to operate, and determines if an automatic response function has been preset (step 320).

The key for executing the automatic response may be any one selected from a plurality of keys included in the key input unit 110, or may be a key separately-constructed for executing the automatic response. When the controller 100 determines in step 320 that the execution of an automatic response to a received call has been preset, the controller 100 outputs an automatic-response message to the caller (step 340). The message has been previously input by the user and stored in the automatic response database 120A of the memory 120. While the automatic-response message is being output, a message notifying the user that the automatic-response message is being output may be displayed as a screen image shown in FIG. 4A. According to this exemplary embodiment of the present invention, upon receiving a call, the procedure of executing the automatic response is performed when the signal input of the predetermined key is sensed. However, in a state in which the execution of the automatic response has been preset by the user, when a call is received, it is possible that the controller 100 notifies the user that the call is received for a predetermined period of time, and executes the automatic response to the received call when communication has not been established before the period of time has elapsed.

While the automatic-response message is being or has been output, the controller 100 proceeds to step 345 in which the controller 100 receives a voice message from the caller. While a voice message is being input by the caller, the controller 100 displays a message notifying the user that the voice message is being input through the display unit 150 as a screen image shown in FIG. 4B. When the controller 100 determines that the input of the voice message has finished, the controller 100 stores the input voice message in the automatic response database 120A of the memory 120 (step 350). In step 355, the controller 100 determines if a signal for notifying the end of the received call is input. When the controller 100 determines in step 355 that the received call has ended, the controller 100 proceeds to step 360, in which the voice message input by the counterpart is converted into text data through the text/voice conversion unit 130. Thereafter, the controller 100 displays contents of the converted text data and information about the received call through the display unit 150 as a screen image shown in FIG. 4C. In contrast, either if the controller 100 determines in step 315 that the signal for executing the automatic response is not input when a call is received, or if the controller 100 determines in step 320 that the automatic response function has not been preset, the controller 100 proceeds to step 325. In step 325, the controller 100 outputs a signal of notifying the user that the call is received, for a period of time. In step 330, the controller 100 determines if the user operates a predetermined key to establish communication for the received call. When the controller 100 determines in step 330 that communication is established, the controller 100 does not execute the automatic response function but operates in a communication mode (step 335). In contrast, when the controller 100 determines in step 330 that the signal of the predetermined key to establish communication for the received call is not input, the controller 100 outputs a predetermined instruction message to the caller (370), and then ends the call.

According to this exemplary embodiment of the present invention, when voice data are input by the caller according to the execution of the automatic response function, the voice data are first stored in the data processing unit 160, and then the voice data stored in the automatic response database 120A are read and converted into text data through the text/voice conversion unit 130 after the call has ended. However, when the voice data are input, the input voice data may be first transmitted to the text/voice conversion unit 130 so as to be converted into text data, and then the converted text data may be stored in the text/voice conversion unit 130. According to an embodiment of the present invention, when a plurality of calls are received, and the automatic response function is executed with respect to the plurality of received calls, the controller 100 displays a list of received messages which are automatically stored according to the execution of the automatic response. Thereafter, when at least one received message is selected from the displayed message list, text data converted from voice data corresponding to the selected message are displayed through the display unit 150.

While the present invention has been shown and described with reference to certain exemplary embodiments thereof, it will be understood by those skilled in the art that various changes in form and details may be made therein without departing from the spirit and scope of the invention as defined by the appended claims. Accordingly, the scope of the invention is not to be limited by the above embodiments but by the claims and the equivalents thereof.

## Claims

1. A method of receiving a call in a wireless terminal, the method comprising the steps of:
determining if an automatic response function is set when a call is received;
executing the automatic response function, when it is determined that the automatic response function is set, to receive voice data from an originator of the call; and
converting the received voice data into text data, and displaying the text data.

2. The method as claimed in claim 1, wherein executing the automatic response comprises operation of at least one of a specific key and a menu key.

3. The method as claimed in claim 1, further comprising a step of transmitting a pre-stored automatic response message to the call originator, when the automatic response is executed.

4. The method as claimed in claim 1, wherein a list of the received voice data is displayed when a plurality of voice data are received, and one voice data is selected from the displayed voice data list so as to display text data associated with the selected voice data.

5. The method as claimed in claim 1, wherein the voice data received from the call originator are converted into the text data when the originator ends the call.

6. The method as claimed in claim 1, wherein the converted text is stored, and the text message is displayed when a menu or key signal for outputting the stored text message from a user is received.

7. A method of receiving a call in a wireless terminal, the method comprising the steps of:
determining if a key for executing an automatic response is input, when a call is received;
transmitting a preset message to an originator of the call, when it is determined that the key for executing the automatic response is input;
receiving voice data from the call originator; and
converting the received voice data into text data, and
displaying the text data.

8. The method as claimed in claim 7, wherein the voice data received from the originator are converted into the text data when the originator ends the call.

9. The method as claimed in claim 7, wherein a list of the received voice data is displayed when a plurality of voice data are received, and one voice data is selected from the displayed voice data list so as to display text data associated with the selected voice data.

10. The method as claimed in claim 7, wherein the converted text is stored, and the text message is displayed when a menu or key signal for outputting the stored text message from a user is received.

11. A method of receiving a call in a wireless terminal, the method comprising the steps of:
determining if a function for executing an automatic response is set, when a call is received;
receiving voice data from an originator of the call, when it is determined that the function is set; and
converting the received voice data into text data, and
displaying the text data.

12. The method as claimed in claim 11, further comprising:
providing notification of reception of the call for a time period when the call is received; and
executing the automatic response function for the call when the time period has elapsed.

13. The method as claimed in claim 11, wherein a list of the received voice data is displayed when a plurality of voice data are received, and one voice data is selected from the displayed voice data list so as to display text data associated with the selected voice data.

14. The method as claimed in claim 11, wherein the converted text is stored, and the text message is displayed when a menu or key signal for outputting the stored text message from a user is received.
